(19) Europäisches Patentamt
European Patent Office
Office européen des brevets

(11) **EP 3 458 228 B1**

(12) **FASCICULE DE BREVET EUROPEEN**

(45) Date de publication et mention
de la délivrance du brevet:
**17.11.2021 Bulletin 2021/46**

(21) Numéro de dépôt: **17722517.4**

(22) Date de dépôt: **08.05.2017**

(51) Int Cl.:
**B25F 5/00** *(2006.01)*   **F16P 3/14** *(2006.01)*

(86) Numéro de dépôt international:
**PCT/IB2017/052659**

(87) Numéro de publication internationale:
**WO 2017/199124 (23.11.2017 Gazette 2017/47)**

(54) **SYSTÈME ET MÉTHODE DE SÉCURITÉ POUR UN OUTIL ÉLECTROPORTATIF**

**SYSTEM UND VERFAHREN ZUR ERHÖHUNG DER SICHERHEIT EINES TRAGBAREN ELEKTRISCHEN WERKZEUGS**

**SYSTEM AND METHOD FOR INCREASING THE SAFETY OF A PORTABLE ELECTRICAL TOOL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.05.2016 CH 6302016**

(43) Date de publication de la demande:
**27.03.2019 Bulletin 2019/13**

(73) Titulaire: **Felco SA**
**2206 Les Geneveys-sur-Coffrane (CH)**

(72) Inventeur: **DOLIVO, Yann**
**1373 Chavornay (CH)**

(74) Mandataire: **P&TS SA (AG, Ltd.)**
**Avenue J.-J. Rousseau 4**
**P.O. Box 2848**
**2001 Neuchâtel (CH)**

(56) Documents cités:
**WO-A1-2007/060698    GB-A- 2 473 061**
**US-A1- 2010 064 532**

**Description**

Domaine technique

La présente invention concerne un système de sécurité pour un outil électroportatif. La présente invention concerne également une méthode pour un tel système de sécurité.

Etat de la technique

Dans le contexte de la présente invention, l'expression « outil électroportatif» désigne un outil électrique ou alimenté électriquement. L'outil peut être alimenté électriquement par une source d'alimentation autonome. Pendant son utilisation, il est porté par un membre de l'utilisateur, par exemple par sa main. En particulier, le même membre qui porte un tel outil permet également de le commander, par exemple à l'aide d'une gâchette. Un outil électroportatif n'a pas une position stationnaire pendant son utilisation, car l'utilisateur le déplace, par exemple pour usiner un nouvel objet ou pour mieux usiner le même objet. En d'autres termes, un outil électroportatif n'est pas stationnaire, c'est-à-dire il n'occupe pas toujours la même position. Il est donc clair à la lumière de cette définition qu'une machine telle qu'une scie stationnaire, par exemple une scie circulaire sur table ou bien une cisaille d'établi, ne rentre pas dans la définition d'outil électroportatif donnée dans ce contexte.

La source d'alimentation d'un tel outil électroportatif peut être par exemple une batterie ou bien un pack de batteries. Dans ce cas, la source est en général une pièce séparée de l'outil. En particulier l'utilisateur peut porter avec une main l'outil et simultanément porter sur lui, par exemple à l'aide d'un sac-à-dos, d'un harnais ou d'une ceinture, la source d'alimentation. Dans un autre cas, la source d'alimentation d'un tel outil électroportatif est dans l'outil électroportatif.

Un outil électroportatif comprend un moteur ou un actionneur pour transmettre une force à un objet externe sur lequel l'outil agit.

Un sécateur, des cisailles, des pinces, des presses, une tronçonneuse portative, une scie circulaire portative, une scie sauteuse portative, un rabot, une sertisseuse, une défonceuse, etc. pour des applications agricoles, viticoles, arboricoles, industrielles, artisanales, textiles, alimentaires, médicales, etc. sont des exemples non limitatifs d'outils électroportatifs selon l'invention.

Un outil électroportatif comprend un organe d'usinage et un organe de support pour cet objet. L'organe d'usinage permet d'usiner un objet et entre en contact direct avec cet objet. Il est mobile pendant l'usinage de l'objet et actionné par un actionneur de l'outil électroportatif.

Dans le contexte de la présente invention, le mot « usiner » indique toute opération effectuée sur l'objet qui permet de le transformer, par exemple de le couper, presser, trancher, raboter etc.

L'organe de support supporte l'objet pendant son usinage et il est fixe pendant l'usinage de l'objet. L'organe de support n'est pas actionné par l'actionneur de l'outil électroportatif. Sa présence est nécessaire pour réaliser cet usinage. L'organe de support est également en contact direct avec cet objet pendant son usinage.

Dans le cas où l'outil électroportatif est un sécateur, sa lame mobile est l'organe d'usinage, car elle permet de couper un objet tel qu'une branche, et la contre-lame est l'organe de support, car elle supporte la branche pendant sa coupe.

Dans le cas où l'outil électroportatif est une scie circulaire, sa lame rotative est l'organe d'usinage, car elle permet de couper un objet tel qu'une pièce en bois, et le plateau comprenant le passage pour la lame et s'appuyant sur l'objet pendant la coupe est l'organe de support.

Dans le cas où l'outil électroportatif est un rabot, sa lame est l'organe d'usinage, car elle permet de couper un objet tel qu'une pièce en bois, et le plateau s'appuyant sur l'objet pendant la coupe est l'organe de support.

Dans le cas où l'outil électroportatif est une tronçonneuse portative, sa chaine rotative est l'organe d'usinage, car elle permet de couper un objet, et le guide chaîne de la tronçonneuse portative autour duquel la chaine rotative de déplace est l'organe de support.

Ces types d'outils sont devenus de plus en plus efficaces et arrivent à générer une force de plusieurs kilo-Newtons. Cependant cette efficacité a augmenté de façon importante le nombre d'accidents professionnels causés par de tels outils. Le besoin de sécurité par rapport au mouvement de la lame mobile de ces outils a donc augmenté rapidement.

Différentes solutions dans l'état de la technique essaient de répondre à ce besoin. Par exemple le document FR2838998 décrit un dispositif de sécurité pour outils coupants ou tranchants motorisés, dans lequel l'outil coupant ou tranchant comprend un organe d'usinage portant deux éléments électriquement conducteurs et isolés entre eux par une pièce isolante. Ces éléments conducteurs font partie d'un circuit de protection qui se ferme si un autre élément conducteur ou une pièce métallique forme contact entre ces éléments. Tel est le cas si l'outil entre en contact avec une installation métallique, par exemple des fils métalliques, ou bien avec un gant à protection métallique. Dans ce cas le serrage des organes de coupe est interrompu. Cette solution prévoit que l'utilisateur porte nécessairement des gants métalliques ou conducteurs.

Le document EP2020275 décrit un système de sécurité pour une scie portative comprenant sur sa lame des émetteurs générant un champ magnétique. L'utilisateur de cette scie porte un vêtement de protection comprenant des boucles conductrices, dans lesquels le champ magnétique induit une tension qui est mesurée par un dispositif de mesure sur le même vêtement. Si cette tension est supérieure à un seuil prédéterminé, un signal est envoyé du vêtement à un récepteur placé dans la scie, afin d'interrompre son mouvement. Cette solution prévoit la présence de plusieurs composants électroniques (émetteurs sur la scie, émetteur sur le vêtement, récepteur sur la scie) et requiert à l'utilisateur de porter un vêtement spécial et lourd.

Le document EP2885962 décrit un autre dispositif de sécurité pour outil électroportatif comprenant un gant à mailles métalliques comprenant une couche placée à un certain niveau de tension, différent du niveau de tension auquel il est placé une lame de l'outil. Cette solution requiert des câbles à relier au gant, afin de fixer son niveau de tension. Ces câbles peuvent être gênants pour l'utilisateur pendant la manipulation de l'outil. En outre ce type de gant métallique est lourd à porter par l'utilisateur.

Le document EP1452280 décrit une tronçonneuse comprenant un détecteur de proximité permettant de détecter la présence d'un objet réalisé en matériau ferromagnétique, conducteur ou opaque. Ce type de détecteur n'est pas adapté pour détecter la présence d'une main d'un utilisateur.

Le document US2013/0127262 décrit un outil électroportatif comprenant une partie métallique en correspondance de la zone sur laquelle s'appuie la main de l'utilisateur afin de porter l'outil. Si l'autre main de l'utilisateur touche la partie dangereuse et métallique de l'outil, par exemple une sonotrode, un circuit comprenant le corps de l'utilisateur vient se fermer, permettant la circulation d'un courant qui peut être détecté par un capteur de courant. Cette solution prévoit la présence d'un contact galvanique entre l'utilisateur et l'outil.

Le document WO2013136311 décrit un circuit de sûreté pour un outil électroportatif, le circuit comportant un élément électriquement conducteur situé sur la poignée de l'outil de manière à être en contact avec la main qui tient l'outil, une ligne de circuit qui relie un organe d'usinage de l'outil à l'élément électriquement conducteur, un moyen de génération de puissance électrique disposé sur la ligne de circuit, un moyen de détection de tension ou de courant disposé sur la ligne de circuit. Des moyens de régulation sont prévus pour intervenir sur un circuit d'excitation, en réaction à une détection par le moyen de détection, lorsqu'une valeur seuil prédéterminée est dépassée, pour imposer l'arrêt du fonctionnement de l'organe d'usinage. Cette solution requiert des moyens chaussants portés par l'utilisateur pour assurer une conductivité électrique entre au moins un des pieds de l'utilisateur et le sol.

Le document FR2831476 décrit un système de sécurité pour un sécateur dans lequel l'utilisateur doit porter sur la main libre un gant métallique, connecté par une connexion filaire à un boîtier de commande. Une tension est imposée sur les lames du sécateur. Le gant comprend une antenne pour envoyer un signal d'alerte au boîtier de commande du sécateur quand la main s'approche trop ou bien touche les lames du sécateur, ce qui cause un passage de courant détectable par le boîtier. En alternative, l'utilisateur porte une veste intégrant la connexion filaire entre le gant et le boîtier de commande. Une solution similaire est décrite dans le document FR2846729.

Le document FR3001404 décrit un système de sécurité pour un sécateur comprenant un détecteur. Ce détecteur comprend un générateur de signal comprenant un condensateur Cs couplé à une interface avec la lame du sécateur, le générateur de signal générant un nombre entier N de répétitions d'une séquence comprenant au moins une impulsion qui est générée en chargeant et déchargeant le condensateur. Un module de calcul compte combien de répétitions sont nécessaires pour avoir une tension aux bornes de la capacité supérieure à une tension prédéterminée, et compare ce nombre de répétitions à une valeur de référence : cette comparaison indique la présence ou l'absence d'un contact avec la lame. Cette solution est compliquée et requiert qu'un train d'impulsions soit généré par le générateur du signal du détecteur, le nombre de transferts de charge effectués fournissant une valeur numérique utilisée par le système pour détecter un contact avec la lame.

Le document US2010064532 décrit une tronçonneuse, pourvue d'un système de sécurité comprenant un suivi du positionnement de l'utilisateur. Ce système de sécurité se base sur plusieurs émetteurs placés sur la tronçonneuse, notamment sur sa lame, et sur un ou plusieurs récepteurs sur le corps de l'utilisateur. La tronçonneuse comprend un processeur relié électriquement à l'ensemble des émetteurs et des récepteurs par câbles. Le processeur est configuré de sorte à pouvoir détecter une distance critique entre l'une des portions du corps monitorées et une surface monitorée de la tronçonneuse, sur la base de la distance entre chaque émetteur et chaque récepteur.

Le document WO07060698 décrit un dispositif de protection pour utilisateurs d'outils coupants pourvus de moyens de détection électromagnétique. Un support protecteur placé sur l'opérateur comprend une pluralité de capteurs émettant un signal électromagnétique, alors que le moyen de détection électromagnétique opère comme une antenne pour permettre une mesure de distance.

Le document GB2473061 concerne un arrangement de sécurité comprenant un tag RFID et un capteur. L'utilisation d'un tag RFID, qui exploite un type particulier de réflexion d'un signal (« backscattering »), rend difficile une évaluation d'une distance d sur la base d'un signal reçu, car son atténuation est proportionnelle à $1/d^6$. En plus, son fonctionnement est basé sur un champ magnétique (H), pour lequel le corps de l'utilisateur est transparent, et ce qui rend le système très sensible à des parties métalliques d'un outil électroportatif. En outre la portée d'un lien RFID dépend très fortement de l'orientation du tag (sa bobine) par rapport à celle du lecteur.

Certains systèmes de sécurité de l'état de la technique exploitent la présence d'une capacité électrostatique qui se forme entre un ensemble d'électrodes et un objet à protéger. Notamment, la fréquence d'un oscillateur RC comprenant cette capacité électrostatique est mesurée. Cette fréquence dépend de la distance entre les électrodes et l'objet. Ces systèmes « capacitifs » ont plusieurs désavantages : en premier lieu, la fréquence varie beaucoup dans le temps, ce qui rend la mesure de la distance peu précise. Ces systèmes sont très sensibles à des champs électrostatiques parasitiques, tels que ceux produits par des lignes de puissance à 50 Hz ou par d'autres outils électriques. La présence de matériau conducteurs (bagues, montres-bracelets, etc.) influence la forme du champ électrostatique et donc la mesure de distance. Enfin, le principe de mesure est très sensible à la pluie, l'humidité, etc., ce qui rends ces systèmes peu adaptés pour une utilisation en plein air, comme c'est le cas pour plusieurs outils électroportatifs.

Bref résumé de l'invention

Un but de la présente invention est de proposer un système de sécurité pour un outil électroportatif exempt des limitations des systèmes de sécurité connus.

Un autre but de l'invention est de proposer un système de sécurité pour un outil électroportatif alternatif par rapport aux systèmes de sécurité connus.

Un autre but de l'invention est de proposer un système de sécurité pour un outil électroportatif dans lequel l'utilisateur n'est pas censé porter des gants métalliques ou conducteurs, qui sont lourds, encombrants et peu ergonomiques.

Un autre but de l'invention est de proposer un système de sécurité pour un outil électroportatif dans lequel l'utilisateur n'est pas censé porter un vêtement spécial et lourd.

Un autre but de l'invention est de proposer un système de sécurité pour un outil électroportatif dans lequel l'utilisateur n'est pas censé porter des moyens chaussants pour assurer une conductivité électrique entre au moins un des pieds de l'utilisateur et le sol.

Un autre but de l'invention est de proposer un système de sécurité pour un outil électroportatif moins compliqué que les solutions connues.

Un autre but de l'invention est de proposer un système de sécurité pour un outil électroportatif qui permet une mesure précise de la distance entre la partie de l'utilisateur à protéger et la partie dangereuse de l'outil électroportatif.

Un autre but de l'invention est de proposer un système de sécurité pour un outil électroportatif qui fonctionne de façon fiable même dans un milieu humide ou pluvieux.

Selon l'invention, ces buts sont atteints notamment au moyen d'un système de sécurité pour un outil électroportatif selon la revendication 1, et au moyen d'une méthode pour un système de sécurité selon la revendication 17.

Le système de sécurité pour un outil électroportatif selon l'invention comprend un générateur de signal radioélectrique arrangé pour générer un signal radioélectrique, ce générateur de signal radioélectrique étant couplé électriquement à l'utilisateur de façon à injecter dans le corps de l'utilisateur ce signal radioélectrique. Ce signal radioélectrique est ensuite émis par l'utilisateur sous la forme d'un signal électromagnétique.

Dans une variante préférentielle, ce générateur de signal radioélectrique est portable par l'utilisateur, c'est-à-dire qu'il a une taille, des dimensions et un poids tels qu'un utilisateur peut le porter.

Le système de sécurité pour un outil électroportatif dans une variante de l'invention comprend un dispositif portable par un utilisateur, par exemple par un premier membre de l'utilisateur tel qu'une main.

Dans une variante préférentielle, le générateur de signal radioélectrique injecte le signal radioélectrique dans le corps de l'utilisateur via le dispositif portable. Dans cette variante, le dispositif portable est couplé électriquement à l'utilisateur, par exemple à son premier membre. Ce dispositif portable peut être par exemple un bracelet, une montre, une bague, un sac-à-dos, une ceinture, un harnais, etc.

Dans le contexte de la présente invention, l'expression « dispositif portable couplé électriquement à l'utilisateur » ou « générateur de signal radioélectrique couplé électriquement à l'utilisateur » indique qu'un signal électrique, par exemple un signal radioélectrique, peut être échangé entre le dispositif portable (respectivement le générateur de signal) et l'utilisateur, par exemple entre le dispositif portable (respectivement le générateur de signal) et son premier membre. Notamment, cette expression indique qu'un signal électrique, par exemple un signal radioélectrique, peut être injecté par le dispositif portable (respectivement par le générateur de signal) dans le corps de l'utilisateur.

Dans une variante préférentielle, un contact galvanique existe entre le dispositif portable (respectivement le générateur de signal) et l'utilisateur, par exemple entre le dispositif portable et son premier membre. A ce propos, le dispositif portable (respectivement le générateur de signal) comprend au moins une zone métallique ou conductrice qui entre en contact direct avec l'utilisateur, par exemple avec son premier membre. Dans une autre variante, il n'existe pas un tel contact galvanique. Dans ce cas le signal électrique est transmis du dispositif portable (respectivement du générateur de signal) à l'utilisateur via un couplage capacitif qui se forme naturellement entre le dispositif portable (respectivement le générateur de signal) et l'utilisateur, par exemple entre le dispositif portable (respectivement le générateur de signal) et le premier membre.

Dans le contexte de cette invention, l'expression « signal électrique » indique une variation d'un courant électrique ou d'une tension dans un élément conducteur d'un circuit électrique ou en correspondance d'un point du circuit électrique. En particulier, la taille du circuit électrique est négligeable par rapport à la longueur d'onde dans l'air correspondante à la fréquence d'un signal électrique, par exemple inférieure d'au moins un ordre de grandeur à cette longueur d'onde. Un signal électrique ayant une fréquence radio sera nommé dans ce contexte « signal radioélectrique ».

Le système de sécurité pour un outil électroportatif selon l'invention comprend également un générateur de signal radioélectrique, arrangé pour générer un signal radioélectrique de référence. Dans une variante, le dispositif portable est arrangé pour coopérer avec ce générateur de signal radioélectrique. En d'autres mots, le dispositif portable est arrangé pour fonctionner avec le générateur de signal radioélectrique.

Dans une première variante, le dispositif portable comprend ce générateur de signal radioélectrique. Dans une variante préférentielle, ce générateur de signal radioélectrique est intégré dans le dispositif portable.

Dans une deuxième variante, le générateur de signal radioélectrique est un dispositif séparé et distinct du dispositif portable, et est connecté au dispositif portable via un élément de connexion, par exemple et de façon non limitative un élément de connexion filaire.

Dans les deux cas, dans une variante préférentielle, le dispositif portable fonctionne conjointement avec le générateur de signal radioélectrique de façon à injecter dans le corps de l'utilisateur le signal radioélectrique généré par le générateur de signal radioélectrique.

Le corps de l'utilisateur, et notamment sa main, comprend une grande quantité d'eau. Il est donc constitué de matériau diélectrique ayant une haute permittivité relative (c'est-à-dire $\varepsilon_r \gg 1$) et a un comportement non-magnétique, car sa perméabilité magnétique relative est sensiblement égale à 1 (c'est-à-dire $\mu_r \sim 1$). En d'autres mots, le corps de l'utilisateur fonctionne comme une antenne quand un signal radioélectrique y est injecté.

Cette antenne (l'utilisateur) émet ce signal radioélectrique sous la forme d'un signal électromagnétique. En d'autres mots, cette antenne (l'utilisateur) émet un signal électromagnétique correspondant au signal radioélectrique généré par le générateur de signal radioélectrique et injecté dans le corps de l'utilisateur grâce au dispositif portable.

En effet, une antenne est en règle générale arrangée pour recevoir et/ou transmettre un signal *électromagnétique.* Dans ce contexte, l'expression « signal électromagnétique » indique un signal dont la longueur d'onde dans l'air correspondante à sa fréquence n'est pas négligeable par rapport à la distance de propagation du signal et/ou à la taille des objets qui se trouvent dans le milieu ambiant du signal. Un signal électromagnétique est en général une combinaison de deux ondes, l'une représentative d'un champ électrique et l'autre d'un champ magnétique.

Les signaux dans le corps de l'utilisateur et ceux émis par l'utilisateur et qui sont donc dans le milieu ambiant entre l'utilisateur et l'outil électroportatif sont des exemples de signaux électromagnétiques.

Par exemple si la fréquence d'un signal est de 30 MHz, la longueur d'onde correspondante dans l'air est de 10 m : un circuit électrique a une taille négligeable par rapport à cette longueur d'onde et le corps humain n'a pas une taille négligeable par rapport à cette longueur d'onde. Pour une telle fréquence on désignera avec l'expression « signal électrique », notamment « signal radioélectrique », le signal dans le circuit électrique, car la longueur d'onde dans l'air correspondante à sa fréquence est négligeable par rapport à la taille du circuit électrique. Pour la même fréquence, le signal dans le corps de l'utilisateur ou émis par le corps de l'utilisateur sera par contre désigné avec l'expression « signal électromagnétique ».

Il est donc clair à la lumière de ces définitions qu'une antenne reliée à un circuit électrique peut émettre sous la forme d'un signal électromagnétique un signal électrique, par exemple un signal radioélectrique, reçu par un générateur de signal électrique, par exemple par un générateur de signal radioélectrique.

De la même façon, une antenne peut recevoir un signal électromagnétique et le transmettre à un circuit électrique sous la forme d'un signal électrique, par exemple d'un signal radioélectrique.

Dans une variante préférentielle, la fréquence du signal radioélectrique généré par générateur de signal appartient à certaines bandes de fréquence disponibles pour des applications ISM, selon les règles de régulation de la table d'allocation de fréquence internationale. Des tests effectués par la demanderesse ont en effet démontré qu'avec une fréquence appartenant à de telles bandes, la présence de la végétation perturbe moins le système de sécurité selon l'invention. En outre, la sélection de certaines fréquences dans ces bandes de fréquence disponibles pour des applications ISM permet d'obtenir une meilleure résolution dans la mesure de la distance entre l'utilisateur et un outil électroportatif.

Dans une variante, le signal électrique de référence a une puissance comprise entre 5 dBm et 20 dBm. Dans une variante préférentielle il a une puissance de 10 dBm.

Le système de sécurité pour un outil électroportatif selon l'invention comprend également l'outil électroportatif, qui est arrangé pour être porté par un membre de l'utilisateur, par exemple par un deuxième membre distinct du premier membre portant le dispositif portable, cet outil électroportatif comprenant un organe d'usinage, un organe de support pour l'objet à usiner, un actionneur relié à l'organe d'usinage et une antenne.

Avantageusement l'antenne est fixée sur l'organe d'usinage et/ou sur l'organe de support. Dans une première variante, elle est placée sur une surface sensiblement planaire de l'organe d'usinage et/ou de l'organe du support, à laquelle elle est fixée par exemple par collage, soudage, ou tout autre moyen de fixation équivalent. Dans une deuxième variante, l'organe d'usinage et/ou l'organe de support comprend un logement pour recevoir l'antenne, l'antenne étant fixée à ce logement. Dans une variante préférentielle ce logement est une gorge usinée dans l'organe d'usinage et/ou dans l'organe de support.

Comme l'antenne a une épaisseur non nulle, dans la première variante elle dépasse la surface de l'organe d'usinage ou de l'organe de support. Par contre dans la deuxième variante la profondeur du logement peut correspondre à l'épaisseur de l'antenne de façon à ce que l'antenne ne dépasse la surface de l'organe d'usinage ou de l'organe de support : cette surface est donc sensiblement planaire.

L'antenne fixée sur l'organe d'usinage et/ou sur l'organe de support de l'outil électroportatif selon l'invention peut être arrangée pour recevoir un signal électromagnétique émis par l'utilisateur, par exemple par son premier membre, via le couplage électrique avec le dispositif portable, et pour transmettre ce signal électromagnétique à un module de calcul d'un circuit électrique sous la forme d'un signal radioélectrique.

En effet le système de sécurité selon l'invention exploite le passage du signal électromagnétique de référence à travers une partie du corps de l'utilisateur et également le fait que l'utilisateur, par exemple un de ses membres, peut émettre un tel signal. Le corps de l'utilisateur fonctionne comme une antenne. Cette antenne émet un signal électromagnétique reçu via le couplage électrique avec le dispositif portable. En champ proche (c'est-à-dire pour des distances qui sont petites par rapport à la longueur d'onde du signal électromagnétique), cette antenne émet un signal électromagnétique dont la partie électrique est prédominante.

Pour cette raison, dans une variante préférentielle, l'antenne fixée sur l'organe d'usinage et/ou sur l'organe de support de l'outil électroportatif et destinée à recevoir le signal émis par l'utilisateur-antenne, est une antenne du type monopole, car elle-même émet un signal électromagnétique dont la partie électrique est prédominante.

Dans une variante préférentielle, le système selon l'invention est basé sur une injection d'un signal dans la partie du corps de l'utilisateur à protéger, sur la réception de ce signal par une antenne sur l'outil électroportatif, notamment sur son organe qui peut être dangereux pour l'utilisateur, et sur la mesure de la variation par rapport à un seuil prédéterminé d'un paramètre (par exemple amplitude et/ou phase) de ce signal, lors du parcours entre la partie du corps de l'utilisateur à protéger et l'organe dangereux pour l'utilisateur.

Le système de sécurité pour un outil électroportatif selon l'invention comprend également un module de calcul mentionné ci-dessus, arrangé pour déterminer une distance entre l'utilisateur et l'organe d'usinage, par exemple une distance entre le premier membre de l'utilisateur et l'organe d'usinage et/ou de support, sur la base du signal électromagnétique que l'antenne de l'outil électroportatif lui transmet sous la forme d'un signal radioélectrique, et pour modifier (par exemple arrêter, inverser ou changer) la vitesse de l'actionneur sur la base de cette distance.

Dans une variante, le module de calcul est arrangé pour déterminer une distance entre l'utilisateur et l'organe d'usinage et/ou de support et/ou une vitesse de l'utilisateur par rapport à l'organe d'usinage et/ou de support (ou une vitesse de l'organe d'usinage et/ou de support par rapport à l'utilisateur) sur la base d'une comparaison entre un paramètre (par exemple l'amplitude et/ou la phase) du signal radioélectrique correspondant au signal électromagnétique reçu par l'antenne de l'outil électroportatif et un seuil.

Ce seuil peut être prédéterminé, être déterminé automatiquement par le module de calcul pendant une phase de calibration de l'outil (comme on le verra plus loin) ou bien être inséré à l'aide de moyens haptiques (tels que de boutons par exemple) dans le module de calcul par l'utilisateur directement.

Dans une autre variante, le générateur de signal radioélectrique peut envoyer le signal radioélectrique à la fois au module de calcul et au dispositif portable. Dans ce cas, le signal radioélectrique généré par le générateur de signal radioélectrique est appelé « signal radioélectrique de référence ». Le module de calcul dans cette variante est arrangé pour déterminer une distance entre l'utilisateur et l'organe d'usinage et/ou de support sur la base d'un signal radioélectrique correspondant au signal électromagnétique reçu par l'antenne de l'outil électroportatif, et du signal radioélectrique de référence.

Le système de sécurité selon l'invention présente notamment l'avantage par rapport à l'art antérieur de ne pas requérir à l'utilisateur de porter des gants nécessairement métalliques ou conducteurs, qui sont lourds, ni de vêtements ou chaussures particuliers. Le dispositif portable peut en effet être un bracelet, une montre, une bague ou bien un gant non métallique ou non conducteur. Il peut être également un sac-à-dos, un harnais ou une ceinture. Il peut être porté par une main, un doigt ou une cuisse de l'utilisateur, ou bien par son tronc. Un contact galvanique entre ce dispositif portable et l'utilisateur, comme discuté, n'est pas nécessaire. Dans certaines variantes, cependant, un tel contact est présent.

Un contact galvanique entre l'outil électroportatif et le membre de l'utilisateur qui porte cet outil n'est pas non plus nécessaire ni souhaité. En d'autres mots, le contact entre l'outil électroportatif et le membre de l'utilisateur qui porte cet outil peut être non-galvanique. Dans ce cas, l'outil électroportatif est dépourvu de parties métalliques ou conductrices en correspondance de la zone sur laquelle s'appuie le membre de l'utilisateur qui soutient l'outil.

Le module de calcul peut être intégré dans l'outil électroportatif, et/ou dans un boîtier de commande de l'outil électroportatif, boîtier qui est en général contenu dans le même moyen de soutien porté par l'utilisateur et contenant la source d'alimentation de l'outil, par exemple un sac-à-dos, un harnais, etc. et/ou dans un boîtier déporté, par exemple un boîtier sur une ceinture portée par l'utilisateur.

Dans une variante préférentielle, l'outil électroportatif comprend une carte électronique, cette carte électronique comprenant l'antenne, un logement étant arrangé pour recevoir la carte électronique.

Dans une autre variante préférentielle, l'outil électroportatif comprend deux cartes électroniques, chaque carte électronique comprenant une antenne, et l'organe d'usinage et/ou l'organe de support a deux côtés, chaque côté comprenant une des deux cartes électroniques. Dans une variante, chaque côté comprend un logement pour recevoir une des deux cartes électroniques. En d'autres mots, sur un côté de l'organe d'usinage et/ou de l'organe de support il y a un logement qui reçoit une carte électronique, et sur l'autre côté de l'organe d'usinage et/ou de l'organe de support il y a un autre logement qui reçoit une autre carte électronique. Cette variante permet à l'utilisateur de tourner l'outil pendant son utilisation, tout en permettant un échange efficace d'un signal électromagnétique entre une des deux antennes et le dispositif portable.

La carte électronique sur l'organe d'usinage et/ou sur de l'organe de support peut être une carte électronique rigide, constituée en général de couches isolantes en époxy renforcé par une trame de fibres de verre ou en céramique. Dans une autre variante elle est souple ou flexible, fabriquée à partir de matière isolante fine, en général diélectrique, par exemple en polyimide ou en céramique. Elle peut être également une carte dite « flex-rigide », comportant à la fois des parties rigides et des parties souples ou flexibles.

Dans une variante préférentielle, le logement a une forme qui épouse la forme de l'organe d'usinage et/ou de l'organe de support. Dans le cas où l'organe d'usinage est une lame, par exemple une lame d'un sécateur qui est sensiblement en forme de C ou d'arc de cercle, le logement est également sensiblement en forme de C ou d'arc de cercle.

Dans une autre variante préférentielle, l'organe de support et portant l'antenne et/ou la carte électronique est une contre-lame, c'est-à-dire une lame qui reste fixe par rapport à une autre lame mobile (l'organe d'usinage), qui se déplace par rapport à la contre-lame. Cette variante est avantageuse car l'organe de support a une position fixe lors de l'usinage. Cependant la présence de l'antenne et/ou de la carte électronique sur l'organe d'usinage tel qu'une lame mobile est également possible.

Dans une variante préférentielle l'organe d'usinage et/ou l'organe de support est usiné, par exemple par fraisage ou tout autre moyen équivalent, pour obtenir le logement pour l'antenne et/ou la carte électronique. Ce logement a une profondeur qui dépend de l'épaisseur de l'organe d'usinage et/ou de l'organe de support. Notamment, la profondeur doit être suffisamment inférieure à l'épaisseur de l'organe d'usinage et/ou de l'organe de support, afin d'en garantir la solidité, mais au même temps suffisamment grande afin d'y loger l'antenne et/ou la carte électronique. Dans une variante préférentielle, la profondeur de ce logement est de l'ordre de grandeur de quelques millimètres, par exemple entre 1.5 mm et 3 mm.

Le dispositif portable l'utilisateur dans une autre variante peut lui-même comprendre une antenne émettrice d'un signal électromagnétique de référence. Dans ce cas, le système peut exploiter à la fois le signal électromagnétique de référence émis par cette antenne émettrice et le signal électromagnétique de référence émis par l'utilisateur, par exemple par le membre de l'utilisateur qui porte le dispositif portable, via le couplage électrique (galvanique ou non) entre ce dispositif portable et l'utilisateur, par exemple son membre.

Dans une autre variante, l'organe d'usinage et/ou l'organe de support peut fonctionner comme une antenne émettrice ou bien comprendre une telle antenne, et émettre le signal électromagnétique de référence qui est donc reçu par une antenne réceptrice sur le dispositif portable.

Dans la variante où l'antenne réceptrice est sur l'organe d'usinage et/ou sur l'organe de support de l'outil électroportatif, le module de calcul selon l'invention compare le signal radioélectrique de référence (ou un seuil, par exemple un paramètre d'un signal, comme son amplitude et/ou sa phase) avec le signal radioélectrique correspondant au signal électromagnétique émis par l'utilisateur, par exemple par ce membre, et reçu par l'antenne de l'organe d'usinage et/ou de l'organe de support (ou avec un paramètre de ce signal, par exemple son amplitude ou sa phase). Le résultat de cette comparaison est une fonction de la distance entre l'utilisateur, par exemple son premier membre, et l'antenne, et donc entre l'utilisateur (ou son premier membre qui ne porte pas l'outil électroportatif) et l'organe d'usinage et/ou l'organe de support, étant donné que la position de l'antenne par rapport à l'organe d'usinage et/ou à l'organe de support est fixe pendant l'utilisation de l'outil électroportatif, et connue à priori ou bien établie pendant une phase de calibration de l'outil, comme on le verra plus loin.

Afin de comparer ces deux signaux, différentes possibilités sont offertes à l'homme du métier. Dans une première variante, l'amplitude du signal radioélectrique de référence est comparée à celle du signal radioélectrique correspondant au signal électromagnétique reçu par l'antenne ou à un seuil. Dans une deuxième variante, la phase du signal radioélectrique de référence est comparée à celle du signal radioélectrique correspondant au signal électromagnétique reçu par l'antenne ou à un seuil. Dans une troisième variante, l'amplitude et la phase du signal radioélectrique de référence sont comparées à celles du signal radioélectrique correspondant au signal électromagnétique reçu par l'antenne ou à des seuils.

Dans les variantes utilisant la phase du signal radioélectrique, cette comparaison est effectuée par un comparateur de phase dans le module de calcul, par exemple un mélangeur. Ce comparateur de phase peut éventuellement être suivi par un filtre passe-bas, par exemple pour filtrer des composantes continues et à basse fréquence. Dans les variantes utilisant la phase du signal radioélectrique, il est souhaitable d'utiliser deux signaux ayant des fréquences différentes, dont une est utilisée pour reconstruire une base de temps.

Comme on l'a vu, dans une variante le générateur de signal radioélectrique du système selon l'invention est intégré dans le dispositif portable. Dans une autre variante le générateur de signal radioélectrique du système selon l'invention est intégré dans l'outil électroportatif. Dans une autre variante, ce générateur de signal radioélectrique est dans le boîtier de commande de l'outil électroportatif placé dans un sac-à-dos ou dans un harnais porté par l'utilisateur. Dans une autre variante, il est dans un boîtier déporté de l'outil électroportatif. Dans une variante préférentielle le générateur de signal radioélectrique et le module de calcul appartiennent à une même carte électronique. Dans une variante préférentielle cette carte est placée dans l'outil électroportatif ou dans le boîtier de commande.

Dans une variante, le système selon l'invention comprend un splitter du signal radioélectrique de référence, arrangé pour envoyer ce signal radioélectrique de référence au dispositif portable et au module de calcul. Dans ce contexte, le mot « splitter » indique un module électronique ayant une entrée et au moins deux sorties.

Dans une variante, le système selon l'invention comprend un premier élément de connexion reliant le splitter au dispositif portable, et un deuxième élément de connexion reliant le module de calcul à l'antenne. Ces éléments de connexion dans une variante sont des éléments filaires. Bien entendu, des éléments de connexion sans fils peuvent également être utilisés à la place des éléments filaires.

Dans une variante, le deuxième élément de connexion reliant le module de calcul à l'antenne réceptrice est un câble coaxial. Dans la variante où la phase du signal radioélectrique de référence est comparée à celle du signal radioélectrique correspondant au signal électromagnétique reçu par l'antenne, le deuxième élément de connexion est un câble coaxial, dont le conducteur extérieur sert pour imposer une tension de référence, par exemple de 0 Volt.

Dans une variante préférentielle le premier élément de connexion reliant le splitter au dispositif portable est sans fils. Dans une variante préférentielle le dispositif portable est autonome et comprend une ou plusieurs piles. Dans une autre variante cette (ces) pile(s) est(sont) rechargeable(s) : dans ce cas le dispositif portable peut comprendre un connecteur qui permet sa connexion filaire avec une source d'énergie externe. Dans une autre variante le dispositif portable peut être chargé sans fils. Dans une autre variante le dispositif portable exploite l'énergie solaire pour se charger. Un élément de connexion relie également le splitter au module de calcul. Dans le cas où le générateur de signal, le splitter et le module de calcul appartiennent à la même carte électronique, cet élément de connexion peut être une piste conductrice de cette carte.

Dans une autre variante préférentielle, il n'existe pas de connexion filaire entre le module de calcul et le dispositif portable. En d'autres mots, il existe une communication sans fils (« wireless ») entre le module de calcul et le dispositif portable. Dans cette variante, le dispositif portable comprend le générateur de signal radioélectrique; de préférence, il comprend également une source d'énergie connectée à ce générateur afin de l'alimenter. Cependant s'autres solutions sont également possibles : par exemple le générateur de signal peut être alimenté par une source d'énergie externe,, ou bien être arrangé pour être chargé par de l'énergie solaire. Dans toutes ces variantes, la présence d'un splitter n'est pas nécessaire.

De préférence, dans cette variante le dispositif portable comprend au moins une zone métallique ou conductrice (par exemple sous la forme d'un ou plusieurs « pads »), qui entre en contact direct avec l'utilisateur, afin de créer un contact galvanique entre le dispositif portable et l'utilisateur. Cependant, comme discuté, la présence de ce contact galvanique n'est pas nécessaire.

Dans une variante préférentielle, le générateur de signal radioélectrique est arrangé pour générer un signal radioélectrique ayant une fréquence qui change dans le temps. La présence d'une fréquence qui n'est pas fixe permet de mieux discriminer la présence d'un objet autre que le membre de l'utilisateur et donc de mieux s'adapter aux caractéristiques de l'environnement où l'utilisateur se trouve. Dans une variante préférentielle, le générateur de signal radioélectrique est arrangé pour générer en même temps plusieurs signaux radioélectriques ayant des fréquences différentes.

Dans une autre variante, le générateur de signal radioélectrique est arrangé pour générer un signal codé, afin de le rendre moins sensible aux interférences et donc augmenter la sécurité du système. Dans une variante préférentielle, le signal est codé de façon numérique. Un décodage (corrélation) effectué dans le module de calcul permet alors de discriminer le signal utile des interférences présentes dans l'environnement. Le codage du signal est alors exploité pour réaliser un appairage entre l'outil électroportatif et le dispositif portable. Cet appairage permet à plusieurs utilisateurs munis de l'appareil de travailler à proximité les uns des autres sans interférence. Cet appairage est effectué de préférence avant la calibration du système. Si un appairage n'est pas réalisé, le dispositif portable du système selon l'invention ne peut pas coopérer avec l'outil électroportatif, ce qui rend le système de sécurité selon l'invention non opératif.

Dans une variante préférentielle le dispositif portable et/ou l'outil électroportatif comprennent des capteurs de mouvement, par exemple des capteurs inertiels tels que des accéléromètres, gyroscopes, etc. qui permettent de détecter des mouvements brusques de l'un des membres de l'utilisateur. Ces capteurs peuvent dans ce cas communiquer au module de calcul la présence de tels mouvements et le module de calcul peut décider d'envoyer un signal de modification de la vitesse de l'actionneur de l'outil électroportatif.

Si la distance entre l'utilisateur et l'organe d'usinage détectée par le module de calcul est petite mais pas suffisamment petite pour être jugée dangereuse, un premier signal d'avertissement, par exemple un signal sonore, audio ou bien une vibration peut être envoyé à l'utilisateur pour l'avertir du possible danger. Dans ce cas la vitesse de l'actionneur de l'outil électroportatif peut être diminuée automatiquement par le système. Si cette distance est jugée dangereuse, la vitesse de l'actionneur de l'outil électroportatif peut être inversée de façon à éloigner l'organe d'usinage de l'utilisateur, ou bien elle peut être réduite. Dans ces cas aussi, un deuxième signal d'avertissement, de préférence un signal d'intensité plus élevée par rapport à celle du premier signal d'avertissement, est envoyé à l'utilisateur.

Dans une autre variante, le module de calcul est arrangé pour déterminer non seulement la distance entre l'utilisateur et l'organe d'usinage, mais également la vitesse à laquelle l'utilisateur, par exemple son premier membre, s'approche à l'organe d'usinage, par exemple par intégration de cette distance.

La présente invention concerne également une méthode pour un système de sécurité, le système comprenant :

- un générateur de signal radioélectrique, arrangé pour générer un signal radioélectrique, ledit générateur de signal radioélectrique étant couplé électriquement à l'utilisateur,
- un outil électroportatif, l'outil électroportatif étant arrangé pour être porté par un membre de l'utilisateur, par exemple par un deuxième membre de l'utilisateur, distinct du premier membre, l'outil électroportatif comprenant

    - un organe d'usinage,
    - un organe de support,
    - un actionneur relié à l'organe d'usinage,
    - une antenne fixée sur l'organe d'usinage et/ou sur l'organe de support,

la méthode comprenant les étapes suivantes :

- injection dans le corps de l'utilisateur dudit signal radioélectrique,
- émission par ledit utilisateur d'un signal électromagnétique correspondant audit signal radioélectrique,
- réception par ladite antenne de l'outil électroportatif dudit signal électromagnétique
- détermination par un module de calcul du système d'une distance entre l'utilisateur et l'organe d'usinage (par exemple entre le premier membre de l'utilisateur et l'organe d'usinage), sur la base d'un signal radioélectrique correspondant au signal électromagnétique reçu par l'antenne,
- modification de la vitesse de l'actionneur sur la base de cette distance.

Dans une variante, la méthode comprend également les étapes suivantes :

- vérification par le module de calcul si une calibration du système de sécurité a été effectuée ;
- arrêt de l'outil électroportatif si aucune calibration n'a été effectuée.

L'étape de calibration permet de prendre en compte des paramètres de l'environnement où l'utilisateur se trouve, par exemple la température et/ou l'humidité, et également la position du dispositif portable par rapport à l'utilisateur et/ou à la taille de l'utilisateur. En particulier, comme le système selon l'invention exploite l'émission par le corps de l'utilisateur d'un signal électromagnétique, l'étape de calibration permet de prendre en considération ses caractéristiques physiques, notamment ses dimensions et sa taille.

Dans cette variante pendant l'étape de calibration l'utilisateur peut être appelé à accomplir certains gestes, par exemple s'approcher à l'organe d'usinage jusqu'à le toucher etc. Pendant cette phase le module de calcul du système selon l'invention peut déterminer un seuil de distance entre l'utilisateur et l'outil électroportatif qui dépend des dimensions et/ou de la taille de l'utilisateur, au-dessous de laquelle le système intervient pour ralentir ou stopper l'actionnement de l'organe d'usinage de l'outil électroportatif. Dans cette variante le système peut être arrangé pour ne pas démarrer et/ou pour se bloquer si cette étape de calibration n'a pas été effectuée.

Dans une variante préférentielle, cette étape de calibration n'est pas effectuée seulement au démarrage du système selon l'invention, mais également pendant le fonctionnement de l'outil électroportatif, par exemples après quelques heures de fonctionnement car certaines conditions, par exemple les conditions de température et/ou humidité, peuvent être changées entretemps.

Dans une variante, le système selon l'invention comprend également au moins un capteur de température et/ou un hygromètre, arrangés pour générer des signaux qui sont pris en considération pendant la phase de calibration et/ou de fonctionnement du système de sécurité selon l'invention.

Dans une variante, la méthode comprend également les étapes suivantes :

- codage du signal radioélectrique généré par le générateur de signal radioélectrique,
- appairage d'un dispositif portable avec l'outil électroportatif sur la base dudit signal codé, le générateur de signal radioélectrique injectant le signal radioélectrique via ce dispositif portable.

Brève description des figures

Des exemples de mise en œuvre de l'invention sont indiqués dans la description illustrée par les figures annexées dans lesquelles :

La figure 1 illustre un exemple schématique d'un mode de réalisation du système de sécurité selon l'invention.

La figure 2 illustre un exemple des deux côtés d'un organe de support de l'outil électroportatif du système selon l'invention, ainsi qu'un exemple de cartes électroniques destinées à être reçues par ces deux côtés de l'organe de support.

La figure 3 illustre une vue en section d'un organe de support d'un mode de réalisation de l'outil électroportatif du système selon l'invention.

La figure 4 illustre un exemple d'un système comprenant l'outil électroportatif du système de sécurité selon l'invention.

La figure 5 illustre un exemple de changement de la phase et de l'amplitude du signal reçu par l'antenne de l'outil électroportatif du système selon l'invention.

La figure 6 illustre un exemple schématique d'un autre mode de réalisation du système de sécurité selon l'invention.

Exemple(s) de mode(s) de réalisation de l'invention

Dans la description suivante fournie à titre d'exemple, on fera référence, par simplicité, à un sécateur électroportatif. L'invention cependant n'est pas limitée à un tel instrument. L'invention n'est pas non plus limitée à l'agriculture, mais inclut aussi, par exemple des cisailles, des pinces, des presses, des tronçonneuses, une scie circulaire portative, une scie sauteuse portative, un rabot, une sertisseuse, une défonceuse, etc. pour des applications agricoles, viticoles, arboricoles, industrielles, artisanales, textiles, alimentaires, médicales, etc.

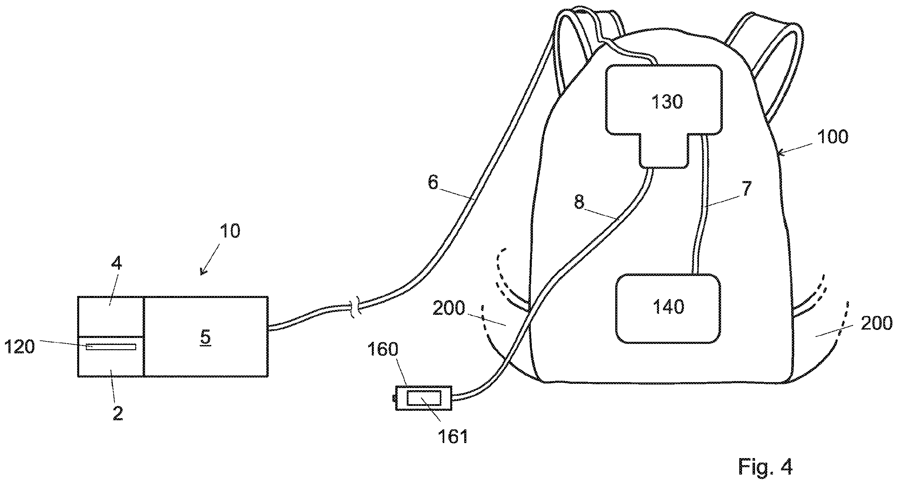

Un exemple schématique d'outil électroportatifs 10 du système selon l'invention est illustré sur la figure 4. Cet outil est arrangé pour être porté par un utilisateur, par exemple par un membre de l'utilisateur tel qu'une main. Dans une variante, cette même main permet de commander l'outil 10 via une gâchette non illustrée. Dans ce cas, l'outil électroportatif 10 comprend un corps 5, un organe d'usinage 4 et un organe de support 2.

L'organe d'usinage 4 permet d'usiner un objet et entre en contact direct avec cet objet. Il est mobile pendant l'usinage de l'objet et actionné par un actionneur (non illustré) de l'outil électroportatif 10, par exemple un moteur électrique.

Comme expliqué, dans le contexte de la présente invention, le mot « usiner » indique toute opération effectuée sur l'objet qui permet de le transformer, par exemple de le couper, presser, trancher, raboter etc.

L'organe de support 2 supporte l'objet pendant son usinage et il est mobile pendant l'usinage de l'objet. L'organe de support n'est pas actionné par l'actionneur de l'outil électroportatif 10. Sa présence est nécessaire pour réaliser cet usinage. L'organe de support 2 entre également en contact direct avec cet objet pendant son usinage.

Dans le cas où l'outil électroportatif 10 est un sécateur, sa lame mobile est l'organe d'usinage 4, car elle permet de couper un objet tel qu'une branche, et la contre-lame est l'organe de support 2, car elle supporte la branche pendant sa coupe.

Dans l'exemple de la figure 4, l'organe de support 2 comprend un logement 120 pour recevoir une antenne, comme on le verra plus loin.

L'outil électroportatif 10 est relié par un élément de connexion 6, un câble dans l'exemple de la figure 4, à un boîtier de commande 130 de l'outil, placé dans un moyen de soutien 100 porté par l'utilisateur, dans l'exemple un sac-à-dos. Ce boîtier de commande 130 est relié via l'élément de connexion 7 à une ou plusieurs batteries 140 dans le même moyen de soutien 100, et via l'élément de connexion 8 à un boîtier déporté 160, qui peut comprendre un affichage 161, et qui est en général placé sur une ceinture 200 portée par l'utilisateur. Dans l'exemple illustré, la ceinture 200 fait partie du sac-à-dos 100.

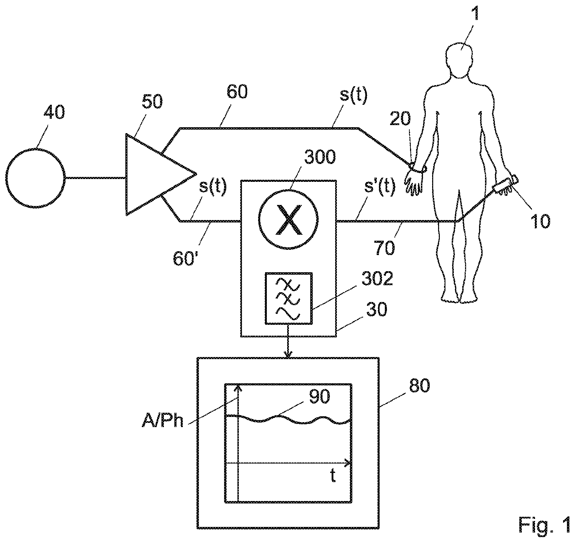

La figure 1 illustre un exemple schématique d'un mode de réalisation du système de sécurité selon l'invention. Dans l'exemple illustré le système selon l'invention comprend un dispositif portable 20, dans ce cas un bracelet, porté par un premier membre d'un utilisateur 1, dans ce cas sa main droite. Ce dispositif portable 20 n'est pas nécessairement un bracelet, mais peut être également une montre, une bague, un sac-à-dos, un harnais, une ceinture, etc.

Dans l'exemple illustré, ce dispositif portable 20 est couplé électriquement au premier membre de l'utilisateur 1. Cependant cet exemple n'est pas limitatif car le dispositif portable 20 est couplé électriquement à une autre partie du corps de l'utilisateur, telle qu'un autre membre ou bien son tronc ou sa tête.

Dans le contexte de la présente invention, l'expression « dispositif portable couplé électriquement à l'utilisateur » indique qu'un signal électrique, notamment un signal radioélectrique, peut être échangé entre le dispositif portable 20 et l'utilisateur. Notamment, cette expression indique qu'un signal électrique, par exemple un signal radioélectrique, peut être injecté par le dispositif portable 20 dans le corps de l'utilisateur 1.

Dans une variante préférentielle, un contact galvanique existe entre le dispositif portable 20 et l'utilisateur 1. A ce propos le dispositif portable 20 comprend au moins une zone métallique ou conductrice (non illustrée) qui entre en contact direct avec l'utilisateur 1, par exemple avec la peau de sa main droite. Dans une autre variante, il n'existe pas un tel contact galvanique. Dans ce cas le signal électrique est transmis du dispositif portable 20 à l'utilisateur 1 via un couplage capacitif qui se forme naturellement entre le dispositif portable et l'utilisateur, la distance entre le dispositif portable et l'utilisateur étant inférieure à 1 cm.

Dans l'exemple illustré sur la figure 1, le système selon l'invention comprend également un outil électroportatif 10 qui est arrangé pour être porté par un membre de l'utilisateur, par exemple par un deuxième membre de l'utilisateur, dans ce cas sa main gauche, cet outil électroportatif 10 comprenant un organe de support 2 et un organe d'usinage 4. Un actionneur (non illustré) dans l'outil électroportatif 10 est relié à l'organe d'usinage 4. L'outil électroportatif 10 comprend également une antenne (non illustrée sur la figure 1).

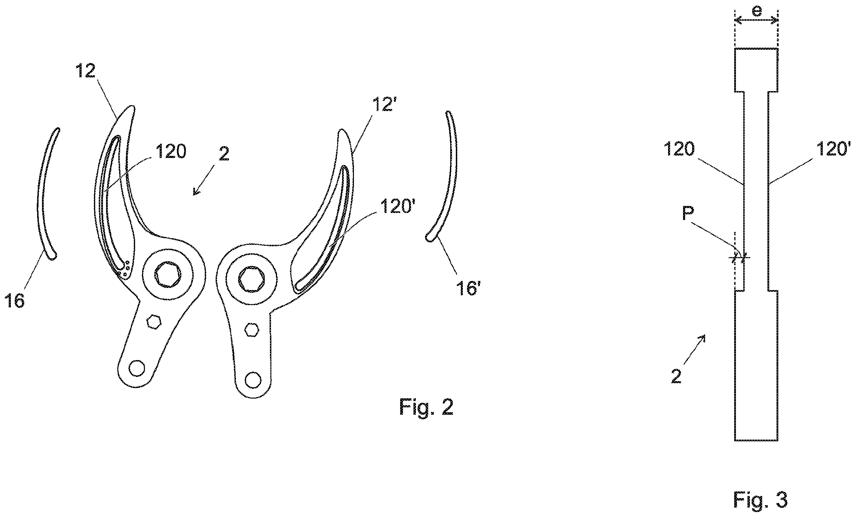

Dans une variante et comme mieux visible sur la figure 2, l'organe de support 2 est une contre-lame. Dans cette variante, la contre-lame 2 comprend un logement 120 pour recevoir une carte électronique 16 comprenant une antenne (non illustrée). L'invention n'est pas cependant limitée à la présence de l'antenne sur l'organe de support 2, car l'antenne peut être présente en alternative sur l'organe d'usinage 4. Dans une autre variante l'organe de support 2 et l'organe d'usinage 4 portent chacun une antenne.

L'invention n'est pas cependant limitée à la présence d'un logement pour cette antenne formé dans l'organe de support 2 et/ou dans l'organe d'usinage 4, car l'antenne peut être tout simplement fixée sur l'organe de support 2 et/ou sur l'organe d'usinage 4 sans que ni l'organe de support 2 ni l'organe d'usinage 4 ne comprennent forcément un logement pour la recevoir. Par exemple l'antenne est placée sur une surface sensiblement planaire de l'organe d'usinage 4 et/ou de l'organe de support 2, à laquelle elle est fixée par exemple par collage, soudage, ou tout autre moyen de fixation équivalent.

L'invention n'est pas cependant limitée non plus à la présence de l'antenne sur l'organe de support 2 et/ou sur l'organe d'usinage 4, car l'antenne peut être également placée sur une autre partie de l'outil électroportatif 10, par exemple sur son corps 5, à une distance connue de l'organe de support 2 et/ou de l'organe d'usinage 4.

Dans la variante de la figure 2, les deux côtés 12, 12' de l'organe de support 2 comprennent un logement 120 respectivement 120', chaque logement recevant une carte électronique 16 respectivement 16'. Cette variante permet à l'utilisateur de tourner l'outil 10, tout en permettant au système de sécurité selon l'invention de fonctionner de façon efficace.

Le système selon l'invention illustré sur la figure 1 comprend également un générateur de signal radioélectrique 40, arrangé pour générer un signal radioélectrique de référence et pour l'envoyer au dispositif portable 20.

Dans une autre variante, non illustrée, le système selon l'invention est dépourvu de dispositif portable 20. Dans ce cas le générateur de signal radioélectrique 40 est couplé électriquement à l'utilisateur 1. Dans ce cas, un signal électrique, notamment un signal radioélectrique, peut être échangé entre le générateur de signal radioélectrique 40 et l'utilisateur. Notamment, un signal radioélectrique, peut être injecté par le générateur de signal 40 dans le corps de l'utilisateur 1.

Dans une variante préférentielle, la fréquence du signal radioélectrique appartient à certaines bandes de fréquence disponibles pour des applications ISM, selon les règles de régulation de la table d'allocation de fréquence internationale Des tests effectués par la demanderesse ont en effet démontré qu'avec cette fréquence la présence de la végétation perturbe moins le système de sécurité selon l'invention. En outre, la sélection de certaines fréquences dans ces bandes de fréquence disponibles pour des applications ISM permet d'obtenir une meilleure résolution dans la mesure de la distance entre l'utilisateur 1 et l'outil électroportatif 10.

En particulier, dans la variante illustrée, le générateur de signal radioélectrique 40 est suivi par un splitter 50, qui est arrangé pour envoyer le signal radioélectrique de référence à la fois au dispositif portable 20 et à un module de calcul 30.

En effet le système illustré sur la figure 1 comprend également un module de calcul 30, visible de façon schématique, et arrangé pour déterminer une distance qui dans ce cas est entre la main droite de l'utilisateur et l'organe de support 2 sur la base du signal radioélectrique, correspondant au signal électromagnétique reçu par l'antenne de l'outil électroportatif 10, et d'un signal radioélectrique de référence (ou d'un seuil), et pour modifier (par exemple arrêter, inverser ou changer) la vitesse de l'actionneur de l'outil 10 sur la base de cette distance.

Le système de sécurité selon l'invention exploite donc le passage du signal électromagnétique correspondant au signal radioélectrique de référence à travers une partie du corps de l'utilisateur 1 et également le fait l'utilisateur, par exemple un membre de l'utilisateur, dans ce cas sa main droite, peut émettre un tel signal.

Le module de calcul 30 peut être intégré dans l'outil électroportatif 10, et/ou dans un boîtier de commande 130 de l'outil électroportatif, visible sur la figure 4, qui est en général contenu dans le même moyen de soutien porté par l'utilisateur 1 et contenant la source d'alimentation de l'outil 140, par exemple un sac-à-dos 100, et/ou dans un boîtier déporté 160, par exemple un boîtier destiné à se fixer sur une ceinture 200 portée par l'utilisateur. Dans une autre variante, le module de calcul 30 peut être intégré dans le dispositif portable 20.

La carte électronique 16 sur l'organe de support 2 de l'outil électroportatif 10 peut être une carte électronique rigide, constituée en général de couches isolantes en époxy renforcé par une trame de fibres de verre ou de céramique. Dans une autre variante elle est souple ou flexible, fabriquée à partir de matière isolante fine, par exemple en polyimide ou en tout autre matériau diélectrique. Elle peut être également une carte dite « flex-rigide », comportant à la fois des parties rigides et des parties souples ou flexibles.

Dans la variante de la figure 2, les logements 120, 120' ont une forme qui épouse la forme de l'organe de support, dans ce cas une forme de C ou d'arc de cercle. Dans la variante de la figure 2, c'est la contre-lame 2 qui porte la(les) carte(s) électronique(s). Cette variante est avantageuse car la contre-lame 2 à une position fixe lors de la coupe. Cependant la présence de l'antenne et/ou de la carte électronique sur un organe d'usinage telle qu'une lame mobile 4 est également possible.

Dans la variante de la figure 2, la contre-lame 2 est usinée, par exemple par fraisage ou tout autre moyen équivalent, pour obtenir le(s) logement(s) 120 respectivement 120' pour la(les) carte(s) électronique(s) 16 respectivement 16'. Chacun de ces logements 120, 120' a une profondeur P, visible sur la figure 3 qui dépend de l'épaisseur e de l'organe de support 2. Dans la variante illustrée cette profondeur est égale pour les deux côtés 12, 12' de la contre-lame 2, mais des épaisseurs différentes sur les deux côtés peuvent être également possibles. Notamment, la profondeur P doit être suffisamment inférieure à l'épaisseur e de l'organe de support 2, afin d'en garantir la solidité, mais au même temps suffisamment grande afin d'y loger la carte électronique 16. Dans une variante préférentielle, la profondeur de ce logement est de l'ordre de grandeur de quelques millimètres, par exemple entre 1.5 mm et 3 mm.

Le module de calcul 30 du système selon l'invention compare le signal radioélectrique de référence (ou un seuil) avec le signal radioélectrique correspondant au signal électromagnétique reçu par l'antenne de l'organe de support 2 et/ou d'usinage 4 (ou à un paramètre de ce signal tel que son amplitude et/ou sa phase). Le résultat de cette comparaison est une fonction de la distance entre le premier membre de l'utilisateur (celui qui ne porte pas l'outil électroportatif) et l'organe de support 2 et/ou d'usinage 4 de l'outil électroportatif 10, étant donné que la position de l'antenne par rapport à l'organe de support 2 et/ou d'usinage 4 de l'outil électroportatif 10 est fixe pendant l'utilisation de l'outil électroportatif 10.

Afin de comparer ces deux signaux, différentes possibilités sont offertes à l'homme du métier. Dans une première variante, l'amplitude du signal radioélectrique de référence (s(t) sur la figure 1) est comparée à celle du signal radioélectrique (s'(t) sur la figure 1) correspondant au signal électromagnétique reçu par l'antenne, ou à un seuil. Dans une deuxième variante, la phase du signal radioélectrique de référence est comparée à celle du signal radioélectrique correspondant au signal électromagnétique reçu par l'antenne, ou à un seuil. Dans une troisième variante, l'amplitude et la phase du signal radioélectrique de référence sont comparées à celles du signal radioélectrique correspondant au signal électromagnétique reçu par l'antenne, ou à des seuils.

Dans les variantes exploitant la phase des signaux radioélectriques, cette comparaison est effectuée par un comparateur de phase 300, par exemple un mélangeur, dans le module de calcul 30, comme visible sur la figure 1. Ce comparateur de phase 300 peut éventuellement être suivi par un filtre passe-bas 302, toujours illustré sur la figure 1, par exemple pour filtrer des composantes continues et à basse fréquence.

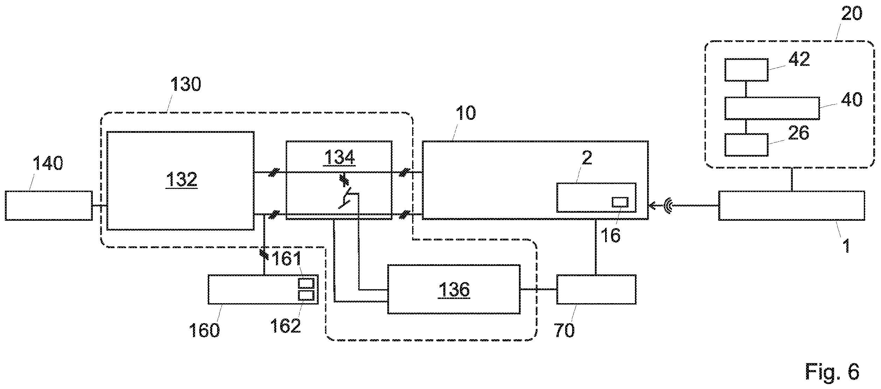

Dans une variante qui sera discutée plus loin en référence à la figure 6, le générateur de signal radioélectrique 40 peut être intégré dans le dispositif portable 20. Dans une autre variante, le générateur de signal radioélectrique 40 peut être intégré dans l'outil électroportatif 10. Dans une autre variante, ce générateur de signal radioélectrique 40 est dans le boîtier de commande 130 placé dans un sac-à-dos 100 ou dans un harnais porté par l'utilisateur. Dans une autre variante, il est dans un boîtier déporté 160 de l'outil électroportatif 10. Dans une variante préférentielle le générateur de signal radioélectrique 40 et le module de calcul 30 appartiennent à une même carte électronique. Dans une variante préférentielle cette carte comprenant le générateur de signal radioélectrique 40 et le module de calcul 30 est placée dans l'outil électroportatif 10 ou dans le boîtier de commande 130.

Dans la variante de la figure 1, un premier élément de connexion 60 relie le splitter 50 au dispositif portable 20 et un deuxième élément de connexion 70 relie l'antenne de l'organe de support 2 et/ou de l'organe d'usinage au module de calcul 30. Un autre élément de connexion 60' relie le splitter 50 au module de calcul 30. Si le générateur de signal 40 et le module de calcul 30 sont intégrés sur une même carte, cet élément de connexion 60' peut être une piste conductrice sur cette carte.

Ces éléments de connexion 60 et 70 dans une variante sont des éléments filaires. Bien entendu, des éléments de connexion sans fils peuvent également être utilisés à la place des éléments filaires. Dans une variante, le deuxième élément de connexion 70 reliant l'antenne au module de calcul 30 est un câble coaxial. Dans la variante où la phase du signal radioélectrique de référence est comparée à celle du signal radioélectrique correspondant au signal électromagnétique reçu par l'antenne, le deuxième élément de connexion 70 comprend un câble coaxial (non illustré), dont le conducteur extérieur sert pour imposer une tension de référence, par exemple de 0 Volt.

Mathématiquement, le signal radioélectrique généré par le générateur du signal 40 peut être représenté avec une fonction purement cosinusoïdale, par exemple

$$s(t) = A\cos\alpha,$$

avec $\alpha = 2*\pi*f*t$, où A est l'amplitude du signal radioélectrique, f est sa fréquence et t le temps. Ce signal est émis par l'utilisateur portant le dispositif portable 20 via le contact électrique avec ce dispositif portable 20.

Le signal radioélectrique correspondant au signal électromagnétique reçu par l'antenne de l'outil électroportatif 10 est un signal du type $s'(t) = A'\cos\beta$, où $A' \neq A$ et $\beta = \alpha + \varphi$.

La différence d'amplitude ($A' \neq A$) et celle de phase ($\varphi$) dépendent de la distance entre l'utilisateur 1 et l'antenne réceptrice de l'outil électroportatif 10, par exemple entre le premier membre de l'utilisateur 1 et l'antenne réceptrice de l'outil électroportatif 10.

Lorsque l'on fait passer ces deux signaux s(t) et s'(t), qui ont la même fréquence, par un comparateur de phase 300, par application des lois trigonométriques bien connues on obtient après filtrage par le filtre passe-bas 302 une composante fonction de coscp. Dans ce cas il est possible d'exploiter la différence de phase entre ces deux signaux s(t) et s'(t) pour déterminer la distance entre l'utilisateur 1 et l'antenne de l'outil électroportatif 10, par exemple entre le premier membre de l'utilisateur 1 et l'antenne de l'outil électroportatif 10.

Si par contre on exploite seulement la différence d'amplitude des deux signaux s(t) et s'(t), un mélangeur 300 ni un filtre passe-bas 302 ne sont pas nécessaires et il est possible d'utiliser à leur place un comparateur de tension.

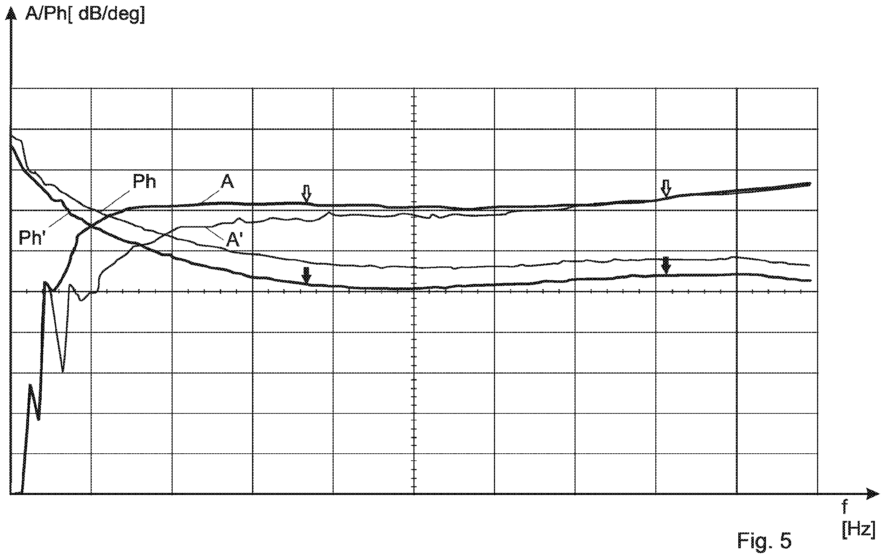

La figure 1 illustre sur un affichage 80 un graphique 90 indiquant comment varie la phase et/ou l'amplitude du signal électromagnétique reçu par l'antenne de l'organe de support 2 et/ou d'usinage 4 de l'outil électroportatif 10. Un exemple de graphiques est également illustré sur la figure 5. Cependant le système selon l'invention ne comprend pas nécessairement un tel affichage de graphiques.

Dans une variante préférentielle, le générateur de signal radioélectrique 40 est arrangé pour générer un signal radioélectrique ayant une fréquence qui change dans le temps et/ou est arrangé pour générer plusieurs signaux radioélectriques ayant des fréquences différentes. La présence d'une fréquence qui n'est pas fixe permet de mieux discriminer la présence d'une branche ou d'un objet autre que le membre de l'utilisateur et donc de mieux s'adapter aux caractéristiques de l'environnement où l'utilisateur se trouve.

Dans une variante préférentielle le dispositif portable 20 et/ou l'outil électroportatif 10 comprennent des capteurs de mouvement (non illustrés), par exemple des capteurs inertiels tels que des accéléromètres, gyroscopes, etc. qui permettent de détecter des mouvements brusques de l'un des membres de l'utilisateur. Ces capteurs peuvent dans ce cas communiquer au module de calcul 30 la présence de tels mouvements et le module de calcul peut décider d'envoyer un signal de modification de la vitesse de l'actionneur de l'outil électroportatif 10.

Si la distance entre l'utilisateur et l'organe de support 2 et/ou l'organe d'usinage 4 détectée par le module de calcul 30 est petite mais pas suffisamment petite pour être jugée dangereuse, un premier signal d'avertissement, par exemple un signal sonore, audio ou bien une vibration peut être envoyé à l'utilisateur 1 pour l'avertir du possible danger. Dans ce cas la vitesse de l'actionneur de l'outil électroportatif 10 peut être diminuée automatiquement par le système. Si cette distance est jugée dangereuse, la vitesse de l'actionneur de l'outil électroportatif 10 peut être inversée de façon à éloigner l'organe d'usinage de l'utilisateur, ou bien elle peut être réduite. Dans ces cas aussi, un deuxième signal d'avertissement, de préférence un signal de plus forte intensité du premier signal d'avertissement, est envoyé à l'utilisateur 1.

Dans une autre variante, le module de calcul 30 est arrangé pour déterminer non seulement la distance entre l'utilisateur 1 et l'organe de support 2 et/ou d'usinage 4, mais également la vitesse à laquelle l'utilisateur, par exemple son premier membre, s'approche à l'organe de support et/ou d'usinage, par exemple par intégration de cette distance.

La figure 6 illustre un exemple schématique d'un autre mode de réalisation du système de sécurité selon l'invention. Dans cette variante le dispositif portable 20 comprend le générateur de signal radioélectrique 40. Sur la variante de la figure 6, le dispositif portable 20 comprend également une source d'énergie 42 connectée à ce générateur 40 afin de l'alimenter. La présence d'une telle source 42 dans le dispositif portable 20 n'est pas nécessaire, car le générateur de signal radioélectrique 40 peut être alimenté (avec ou sans fils) par une source d'énergie externe (non illustré). Cette source d'énergie externe peut être alternative ou complémentaire à la source d'énergie 42 dans le dispositif portable 20.

Dans la variante où le dispositif portable 20 comprend le générateur de signal radioélectrique 40, la présence d'un élément de connexion filaire 60 de la figure 1 (entre le générateur de signal 40 et le dispositif portable 20) n'est pas nécessaire.

Dans la variante illustrée sur la figure 6, le dispositif portable 20 comprend également au moins une zone métallique ou conductrice 26 (par exemple sous la forme d'un ou plusieurs « pads »), qui est destinée à entrer en contact direct avec l'utilisateur 1, afin de créer un contact galvanique entre le dispositif portable et l'utilisateur. Cependant, comme discuté, la présence de ce contact galvanique n'est pas nécessaire.

Dans une variante préférentielle, le dispositif portable 20 est placé en proximité de la partie du corps de l'utilisateur 1 à protéger. Par exemple, le dispositif portable 20 est un bracelet et il est porté près de la main de l'utilisateur 1 à protéger.

Le signal généré par le générateur de signal radioélectrique 40 est donc injecté dans la partie du corps de l'utilisateur à protéger (sa main par exemple) et le corps de l'utilisateur émet un signal électromagnétique correspondant au signal généré par le générateur de signal radioélectrique 40.

Ce signal est ensuite reçu par une antenne (non illustrée), par exemple placée sur une carte électronique 16 sur l'organe de support 2 de l'outil électroportatif 10.

A travers l'élément de connexion 70 de la figure 6 (qui correspond à l'élément de connexion 6 de la figure 4), le signal reçu est envoyé au boîtier de commande 130.

Dans une variante préférentielle, l'élément de connexion 70 est un élément de connexion filaire. Dans une variante préférentielle, il comprend un câble blindé.

Dans la variante de la figure 6, le boîtier de commande 130 est relié à la source d'alimentation 140 de l'outil électroportatif 10 et à un boîtier déporté 160, qui peut comprendre un affichage 161 et/ou un bouton ON/OFF 162 de l'outil électroportatif 10.

Dans la variante illustrée sur la figure 6, le boîtier de commande 130 comprend un module de contrôle 132 de l'outil électroportatif, et un module de freinage/arrêt 134 de l'actionneur de l'outil électroportatif 10.

Bien que sur la figure 6 ces deux modules ont été illustrés avec deux blocs séparés et en série, il faut comprendre que le module de freinage/arrêt 134 pourrait faire partie du module de contrôle 132 de l'outil électroportatif 10.

Le boîtier de commande 130 de la figure 6 comprend également un module de décision 136 qui reçoit le signal RF reçu via l'élément de connexion 70 et qui est arrangé pour décider comment commander le module de freinage/arrêt 134 sur la base du signal reçu.

Dans ce cas également, il faut comprendre que le module de décision 136, bien qu'illustré en tant que bloc séparé du module de contrôle 132 et du module de freinage/arrêt 134, pourrait faire partie du module de contrôle 132 et/ou du module de freinage/arrêt 134.

Le module de calcul (référence 30 sur la figure 1) n'est pas explicitement illustré sur la figure 6. Il peut appartenir au module de contrôle 132 et/ou au module de freinage/arrêt 134 et/ou au module de décision 136 et/ou à un module séparé, de préférence placé dans le boîtier de commande 130 ou connecté à ce boîtier. Dans une autre variante, il appartient à l'outil électroportatif 10.

La présente invention concerne également une méthode pour un système de sécurité, le système comprenant

- un générateur de signal radioélectrique 40, arrangé pour générer un signal radioélectrique de référence et , couplé électriquement à l'utilisateur 1, - l'outil électroportatif 10 étant arrangé pour être porté par un membre de l'utilisateur 1, l'outil électroportatif 10 comprenant

  - un organe d'usinage 4
  - un organe de support 2,
  - un actionneur relié à l'organe d'usinage 4,
  - une antenne fixée sur l'organe d'usinage 4 et/ou sur l'organe de support 2,

la méthode comprenant les étapes suivantes :

- injection dans le corps de l'utilisateur 1 dudit signal radioélectrique s(t) via le couplage électrique entre l'utilisateur 1 et le générateur de signal 40,
- émission par l'utilisateur 1 dudit signal radioélectrique s(t) sous la forme d'un signal électromagnétique,
- réception par l'antenne de l'outil électroportatif 10 du signal électromagnétique,
- détermination par un module de calcul 30 du système d'une distance entre l'utilisateur 1 et l'organe de support 2 et/ou d'usinage 4 sur la base d'un signal radioélectrique correspondant au signal électromagnétique reçu par l'antenne,
- modification de la vitesse de l'actionneur sur la base de cette distance.

Dans une variante, la méthode comprend également les étapes suivantes :

- vérification par le module de calcul 30 si une calibration du système de sécurité a été effectuée ;
- arrêt de l'outil électroportatif 10si aucune calibration n'a été effectuée.

L'étape de calibration permet de prendre en compte des paramètres de l'environnement où l'utilisateur se trouve, par exemple la température et/ou l'humidité, et également la position du dispositif portable par rapport à l'utilisateur et/ou à la taille de l'utilisateur. A ce propos, le système selon l'invention comprend au moins un capteur de température et/ou un hygromètre. Dans cette variante pendant l'étape de calibration l'utilisateur peut être appelé à accomplir certains gestes, par exemple s'approcher à l'organe d'usinage jusqu'à le toucher etc. Dans cette variante le système est arrangé pour ne pas démarrer et/ou pour se bloquer si cette étape de calibration n'a pas été effectuée. Dans une variante préférentielle, cette étape de calibration n'est pas effectuée seulement au démarrage du système selon l'invention, mais également pendant le fonctionnement du système, par exemples après quelques heures de fonctionnement car certaines conditions, par exemple les conditions de température et/ou humidité, peuvent avoir changé entretemps.

Dans une variante, la méthode comprend également les étapes suivantes :

- codage du signal radioélectrique généré par le générateur de signal radioélectrique 40,
- appairage d'un dispositif portable 20 avec l'outil électroportatif 10 sur la base dudit signal codé, le générateur de signal radioélectrique 40 injectant le signal radioélectrique via le dispositif portable 20.

Dans une variante préférentielle, l'étape d'appairage est effectuée de préférence avant la calibration du système. Si un appairage n'est pas réalisé, le dispositif portable du système selon l'invention ne peut pas coopérer avec l'outil électroportatif, ce qui rend le système de sécurité selon l'invention non opératif.

Avantageusement, le codage permet également de rendre le système de l'invention moins sensible aux interférences et donc d'en augmenter la sécurité.

**Signes de référence employés sur les figures**

| 1 | Utilisateur |
| 2 | Organe de support |

| 4 | Organe d'usinage |
| 5 | Corps de l'outil électroportatif |
| 6,7,8 | Eléments de connexion |
| 10 | Outil électroportatif |
| 12,12' | Côtés de l'organe de support |
| 16, 16' | Cartes électroniques |
| 20 | Dispositif portable |
| 26 | Zone métallique ou conductrice |
| 30 | Module de calcul |
| 40 | Générateur de signal radioélectrique |
| 42 | Source d'énergie du dispositif portable |
| 50 | Splitter |
| 60 | Premier élément de connexion |
| 70 | Deuxième élément de connexion |
| 60' | Troisième élément de connexion |
| 80 | Affichage |
| 90 | Graphique |
| 100 | Moyen de soutien |
| 120, 120' | Logements |
| 130 | Boîtier de commande |
| 132 | Module de contrôle de l'outil électroportatif |
| 134 | Module de freinage/arrêt |
| 136 | Module de décision |
| 140 | Source d'alimentation |
| 160 | Boîtier déporté |
| 161 | Affichage du boîtier déporté |
| 162 | Bouton ON/OFF du boîtier déporté |
| 200 | Ceinture |
| 300 | Comparateur de phase |
| 302 | Filtre passe-bas |
| s(t) | Signal radioélectrique de référence |
| s'(t) | Signal radioélectrique |
| A, A' | Amplitude |
| Ph, Ph' | Phase |
| e | Epaisseur de l'organe de support |
| P | Profondeur du logement 120 |

**Revendications**

1. Système de sécurité pour un outil électroportatif (10), comprenant :

   - un générateur de signal radioélectrique (40), arrangé pour générer un signal radioélectrique (s(t)), ,
   - l'outil électroportatif (10) étant arrangé pour être porté par un membre de l'utilisateur (1), ledit outil électroportatif (10) comprenant

      - un organe d'usinage (4),
      - un organe de support (2),
      - un actionneur relié à l'organe d'usinage (4),
      - une antenne, ladite antenne étant fixée sur ledit organe d'usinage (4) et/ou sur ledit organe de support (2),

   - un module de calcul (30),

   **caractérisé en ce que**
   ledit générateur de signal radioélectrique (40) est couplé électriquement audit utilisateur (1) de façon à injecter dans le corps de l'utilisateur (1) ledit signal radioélectrique (s(t)), ledit signal radioélectrique (s(t)) étant ensuite émis par ledit utilisateur (1) sous la forme d'un signal électromagnétique, **en ce que**
   ladite antenne est arrangée pour recevoir ledit signal électromagnétique, et **en ce que**

   - ledit module de calcul (30) est arrangé pour déterminer une distance entre l'utilisateur (1) et ledit organe d'usinage (4) sur la base d'un signal radioélectrique (s'(t)) correspondant audit signal électromagnétique reçu par ladite antenne, et pour modifier la vitesse dudit actionneur sur la base de cette distance.

2. Système selon la revendication 1, ledit organe d'usinage (4) et/ou ledit organe de support (2) comprenant un logement (120) pour recevoir ladite antenne.

3. Système selon l'une des revendications 1 ou 2, ledit outil électroportatif (10) comprenant une carte électronique (16), ladite carte électronique comprenant ladite antenne.

4. Système selon la revendication précédente, ledit outil électroportatif (10) comprenant deux cartes électroniques (16, 16'), chaque carte électronique (16, 16') comprenant une antenne, ledit organe d'usinage (4) et/ou ledit organe de support (2) ayant deux côtés (12, 12'), chaque côté comprenant une carte électronique.

5. Système selon l'une des revendications 2 à 4, ledit logement (120, 120') ayant une forme qui épouse la forme dudit organe d'usinage(4) et/ou dudit organe de support (2).

6. Système selon la revendication 5, ledit organe d'usinage (4) étant une lame, ledit organe de support (2) étant une contre-lame, ledit logement (120) étant sensiblement en forme de C ou d'arc de cercle.

7. Système selon l'une des revendications 1 à 6, comprenant un dispositif portable (20) par ledit utilisateur (1).

8. Système selon la revendication précédente, ledit générateur de signal radioélectrique (40) injectant ledit signal radioélectrique dans le corps de l'utilisateur (1) via le dispositif portable.

9. Système selon l'une des revendications 7 ou 8, ledit générateur de signal radioélectrique (40) étant intégré dans ledit dispositif portable (20).

10. Système selon l'une des revendications 7 ou 8, ledit générateur de signal radioélectrique (40) étant un dispositif séparé et distinct du dispositif portable (20), ledit système comprenant un élément de connexion (60) entre ledit générateur de signal radioélectrique (40) et ledit dispositif portable (20).

11. Système selon l'une des revendications 1 à 10, ledit module de calcul (30) étant arrangé pour déterminer une distance entre l'utilisateur (1) et ledit organe d'usinage (4) et/ou de support (2) sur la base d'une comparaison entre un paramètre du signal radioélectrique (s'(t)) correspondant audit signal électromagnétique reçu par l'antenne de l'outil électroportatif (10) et un seuil.

12. Système selon l'une des revendications 1 à 10, ledit module de calcul (30) étant arrangé pour déterminer une distance entre l'utilisateur (1) et ledit organe d'usinage (4) et/ou de support (2) sur la base dudit signal radioélectrique (s'(t)) correspondant au signal électromagnétique reçu par ladite antenne de l'outil électroportatif (10) et d'un signal radioélectrique de référence (s(t)).

13. Système selon la revendication précédente, comprenant un splitter (50) du signal radioélectrique, arrangé pour envoyer ledit signal radioélectrique audit dispositif portable (20) et audit module de calcul (30), ledit signal radioélectrique de référence (s(t)) étant le signal envoyé par ledit splitter (50) audit module de calcul (30).

14. Système selon l'une des revendications 7 à 13, ledit dispositif portable (20) étant un bracelet, une montre, une bague, un sac à dos, une ceinture ou un harnais.

15. Système selon l'une des revendications 7 à 14, ledit dispositif portable (20) comprenant une zone métallique ou conductrice (26) de façon à créer un contact entre le dispositif portable (20) et l'utilisateur (1), par exemple entre le dispositif portable (20) ledit premier membre de l'utilisateur (1).

16. Système selon l'une des revendications 1 à 15, ledit générateur de signal radioélectrique (40) étant arrangé pour générer un signal radioélectrique ayant une fréquence qui change dans le temps et/ou étant arrangé pour générer plusieurs signaux radioélectriques ayant des fréquences différentes.

17. Méthode pour un système de sécurité selon la revendication 1,
ladite méthode comprenant les étapes suivantes :

- injection dans le corps de l'utilisateur (1) dudit signal radioélectrique (s(t)),
- émission par ledit utilisateur (1) d'un signal électromagnétique correspondant audit signal radioélectrique (s(t)),
- réception par ladite antenne de l'outil électroportatif (10) dudit signal électromagnétique,
- détermination par un module de calcul (30) dudit système d'une distance entre l'utilisateur (1) et ledit organe d'usinage (4) sur la base d'un signal radioélectrique (s'(t)) correspondant au signal électromagnétique reçu par ladite antenne,
- modification de la vitesse de l'actionneur sur la base de cette distance.

18. Méthode selon la revendication précédente, comprenant les étapes suivantes :

- vérification par le module de calcul (30) si une calibration dudit système de sécurité a été effectuée,
- arrêt dudit outil électroportatif (10) si aucune calibration n'a été effectuée.

19. Méthode selon l'une des revendications 17 ou 18, comprenant étapes suivantes :

- codage du signal radioélectrique (s(t)) généré par le générateur de signal radioélectrique (40),
- appairage d'un dispositif portable (20) avec l'outil électroportatif (10) sur la base dudit signal codé, ledit générateur de signal radioélectrique (40) injectant ledit signal radioélectrique via ledit dispositif portable (20).

## Patentansprüche

1. Sicherheitssystem für ein tragbares elektrisches Werkzeug (10), umfassend:

- einen Funksignalgenerator (40), der dazu eingerichtet ist, ein Funksignal (s(t)) zu erzeugen,
- wobei das tragbare elektrische Werkzeug (10) dazu eingerichtet ist, von einer Gliedmaße des Benutzers (1) getragen zu werden, wobei das tragbare elektrische Werkzeug (10) umfasst

- ein Bearbeitungselement (4),
- ein Halterungselement (2),
- ein Stellglied, das mit dem Bearbeitungselement (4) verbunden ist,
- eine Antenne, wobei die Antenne an dem Bearbeitungselement (4) und/oder an dem Halterungselement (2) befestigt ist,

- ein Rechenmodul (30),

**dadurch gekennzeichnet, dass**
der Funksignalgenerator (40) elektrisch an den Benutzer (1) gekoppelt ist, so dass das Funksignal (s(t)) in den Körper des Benutzers (1) eingeleitet wird, wobei das Funksignal (s(t)) daraufhin von dem Benutzer (1) in Form eines elektromagnetischen Signals ausgesendet wird, dass
die Antenne dazu eingerichtet ist, das elektromagnetische Signal zu empfangen, und dass

- das Rechenmodul (30) dazu eingerichtet ist, einen Abstand zwischen dem Benutzer (1) und dem Bearbeitungselement (4) auf der Grundlage eines Funksignals (s'(t)) zu bestimmen, das dem von der Antenne empfangenen elektromagnetischen Signal entspricht, und die Geschwindigkeit des Stellglieds auf der Grundlage dieses Abstands zu ändern.

2. System nach Anspruch 1, wobei das Bearbeitungselement (4) und/oder das Halterungselement (2) eine Aufnahme (120) zum Aufnehmen der Antenne umfassen.

3. System nach einem der Ansprüche 1 oder 2, wobei das tragbare elektrische Werkzeug (10) eine Leiterplatte (16) umfasst, wobei die Leiterplatte die Antenne umfasst.

4. System nach dem vorhergehenden Anspruch, wobei das tragbare elektrische Werkzeug (10) zwei Leiterplatten (16, 16') umfasst, wobei jede Leiterplatte (16, 16') eine Antenne umfasst, wobei das Bearbeitungselement (4) und/oder das Halterungselement (2) zwei Seiten (12, 12') aufweist, wobei jede Seite eine Leiterplatte umfasst.

5. System nach einem der Ansprüche 2 bis 4, wobei die Aufnahme (120, 120') eine Form hat, die an die Form des Bearbeitungselements (4) und/oder des Halterungselements (2) angepasst ist.

6. System nach Anspruch 5, wobei das Bearbeitungselement (4) eine Klinge ist, wobei das Halterungselement (2) eine Gegenklinge ist, wobei die Aufnahme (120) im Wesentlichen C- oder kreisbogenförmig ist.

7. System nach einem der Ansprüche 1 bis 6, umfassend eine vom Benutzer (1) tragbare Vorrichtung (20).

8. System nach dem vorhergehenden Anspruch, wobei der Funksignalgenerator (40) das Funksignal über die tragbare Vorrichtung in den Körper des Benutzers (1) einleitet.

9. System nach einem der Ansprüche 7 oder 8, wobei der Funksignalgenerator (40) in die tragbare Vorrichtung (20) integriert ist.

10. System nach einem der Ansprüche 7 oder 8, wobei der Funksignalgenerator (40) eine separate und von der tragbaren Vorrichtung (20) verschiedene Vorrichtung ist, wobei das System ein Anschlussstück (60) zwischen dem Funksignalgenerator (40) und der tragbaren Vorrichtung (20) umfasst.

11. System nach einem der Ansprüche 1 bis 10, wobei das Rechenmodul (30) dazu eingerichtet ist, einen Abstand zwischen dem Benutzer (1) und dem Bearbeitungs- (4) und/oder Halterungselement (2) auf der Grundlage eines Vergleichs zwischen einem Parameter des Funksignals (s'(t)), das dem von der Antenne des tragbaren elektrischen Werkezeugs (10) empfangenen elektromagnetischen Signal entspricht, und einem Schwellenwert zu bestimmen.

12. System nach einem der Ansprüche 1 bis 10, wobei das Rechenmodul (30) dazu eingerichtet ist, einen Abstand zwischen dem Benutzer (1) und dem Bearbeitungs- (4) und/oder Halterungselement (2) auf der Grundlage des Funksignals (s'(t)), das dem von der Antenne des tragbaren elektrischen Werkzeugs (10) empfangenen elektromagnetischen Signal entspricht, und eines Referenzfunksignals (s(t)) zu bestimmen.

13. System nach dem vorhergehenden Anspruch, umfassend einen Splitter (50) für das Funksignal, der dazu eingerichtet ist, das Funksignal an die tragbare Vorrichtung (20) und an das Rechenmodul (30) zu senden, wobei das Referenzfunksignal (s(t)) das von dem Splitter (50) an das Rechenmodul (30) gesendete Signal ist.

14. System nach einem der Ansprüche 7 bis 13, wobei die tragbare Vorrichtung (20) ein Armband, eine Uhr, ein Ring, ein Rucksack, ein Gürtel oder ein Sicherheitsgeschirr ist.

15. System nach einem der Ansprüche 7 bis 14, wobei die tragbare Vorrichtung (20) einen metallenen oder leitenden Bereich (26) umfasst, so dass ein Kontakt zwischen der tragbaren Vorrichtung (20) und dem Benutzer (1) geschaffen wird, beispielsweise zwischen der tragbaren Vorrichtung (20) und der ersten Gliedmaße des Benutzers (1) .

16. System nach einem der Ansprüche 1 bis 15, wobei der Funksignalgenerator (40) dazu eingerichtet ist, ein Funksignal mit einer Frequenz zu erzeugen, die sich zeitlich ändert, und/oder dazu eingerichtet ist, mehrere Funksignale mit unterschiedlichen Frequenzen zu erzeugen.

**17.** Verfahren für ein Sicherheitssystem nach Anspruch 1, wobei das Verfahren die folgenden Schritte umfasst:

- Einleiten des Funksignals (s(t)) in den Körper des Benutzers (1),
- Aussenden eines elektromagnetischen Signals, das dem Funksignal (s(t)) entspricht, durch den Benutzer (1),
- Empfangen des elektromagnetischen Signals durch die Antenne des tragbaren elektrischen Werkzeugs (10),
- Bestimmen eines Abstands zwischen dem Benutzer (1) und dem Bearbeitungselement (4) durch das Rechenmodul (30) auf der Grundlage eines Funksignals (s'(t)), das dem von der Antenne empfangenen elektromagnetischen Signal entspricht,
- Ändern der Geschwindigkeit des Stellglieds auf der Grundlage dieses Abstands.

**18.** Verfahren nach dem vorhergehenden Anspruch, umfassend die folgenden Schritte:

- Überprüfen, ob eine Kalibrierung des Sicherheitssystems vorgenommen worden ist, durch das Rechenmodul (30),
- Abschalten des tragbaren elektrischen Werkzeugs (10), wenn keine Kalibrierung vorgenommen worden ist.

**19.** Verfahren nach einem der Ansprüche 17 bis 18, umfassend die folgenden Schritte:

- Codieren des vom Funksignalgenerator (40) erzeugten Funksignals (s(t)),
- Pairing einer tragbaren Vorrichtung (20) mit dem tragbaren elektrischen Werkzeug (10) auf der Grundlage des codierten Signals, wobei der Funksignalgenerator (40) das Funksignal über die tragbare Vorrichtung (20) einleitet.

**Claims**

**1.** Safety system for a power tool (10), comprising:

- a radio-electric signal generator (40), arranged for generating a radio-electric signal (s(t)),
- the power tool (10) being arranged to be carried by a limb of the user (1), said power tool (10) comprising

- a machining member (4),
- a support member (2),
- an actuator connected to the machining member (4),
- an antenna, said antenna being fastened onto said machining member (4) and/or onto said support member (2),

- a calculation module (30),

**characterized in that**
said radio-electric signal generator (40) is electrically coupled to said user (1) so as to inject into the user's body (1) said radio-electric signal (s(t)), said radio-electric signal (s(t)) being then transmitted by said user (1) in the form of an electromagnetic signal, **in that**
said antenna is arranged for receiving said electromagnetic signal,
and **in that**

- said calculation module (30) is arranged for determining a distance between the user (1) and said machining member (4) on the basis of a radio-electric signal (s'(t)) corresponding to said electromagnetic signal received by said antenna, and for modifying the speed of said actuator based on this distance.

**2.** System of claim 1, said machining member (4) and/or said support member (2) comprising a housing (120) for receiving said antenna.

**3.** System according to one of claims 1 or 2, said power tool (10) comprising an electronic card (16), said electronic card comprising said antenna.

**4.** System according to the preceding claim, said power tool (10) comprising two electronic cards (16, 16'), each electronic card (16, 16') comprising an antenna, said machining member (4) and/or said support member (2) having two sides (12, 12'), each side comprising an electronic card.

**5.** System according to one of claims 2 to 4, said housing (120, 120') having a shape that matches the shape of said machining member (4) and/or of said support member (2).

**6.** System of claim 5, said machining member (4) being a blade, said support member (2) being a counter-blade, said housing (120) being substantially C-shaped or arc-shaped.

**7.** System according to one of claims 1 to 6, comprising a device (20) portable by said user (1).

**8.** System according to the preceding claim, said radio-electric signal generator (40) injecting said radio-electric signal into the body of the user (1) via the portable device.

9. System according to one of claims 7 or 8, said radio-electric signal generator (40) being integrated in said portable device (20).

10. System according to one of claims 7 or 8, said radio-electric signal generator (40) being a device separate and distinct from the portable device (20), said system comprising a connection element (60) between said radio-electric signal generator (40) and said portable device (20).

11. System according to one of claims 1 to 10, said calculation module (30) being arranged for determining a distance between the user (1) and said machining member (4) and/or support member (2) on the basis of a comparison between a parameter of the radio-electric signal (s'(t)) corresponding to said electromagnetic signal received by the antenna of the power tool (10) and a threshold.

12. System according to one of claims 1 to 10, said calculation module (30) being arranged for determining a distance between the user (1) and said machining member (4) and/or support member (2) on the basis of said radio-electric signal (s'(t)) corresponding to the electromagnetic signal received by said antenna of the power tool (10) and a reference radio-electric signal (s(t)).

13. System according to the preceding claim, comprising a splitter (50) of the radio-electric signal, arranged for sending said radio-electric signal to said portable device (20) and to said calculation module (30), said reference radio-electric signal (s(t)) being the signal sent by said splitter (50) to said calculation module (30).

14. System according to one of claims 7 to 13, said portable device (20) being a bracelet, a watch, a ring, a backpack, a belt or a harness.

15. System according to one of claims 7 to 14, said portable device (20) comprising a metallic or conductive zone (26) so as to create a contact between the portable device (20) and the user (1), for example between the portable device (20) and said first limb of the user (1).

16. System of one of claims 1 to 15, said radio-electric signal generator (40) being arranged for generating a radio-electric signal having a frequency that changes over time and/or being arranged for generating a plurality of radio-electric signals having different frequencies.

17. Method for a security system according to claim 1, said method comprising the following steps:

- injection into the body of the user (1) of said radio-electric signal (s(t)),
- emission by said user (1) of an electromagnetic signal corresponding to said radio-electric signal (s(t)),
- reception, by said antenna of the power tool (10), of said electromagnetic signal,
- determination, by a calculation module (30) of said system, of a distance between the user (1) and said machining member (4) on the basis of a radio-electric signal (s'(t)) corresponding to the electromagnetic signal received by said antenna,
- modification of the speed of the actuator on the basis of this distance.

18. Method according to the preceding claim, comprising the following steps:

- verification by the calculation module (30) if a calibration of said security system has been performed,
- stopping said power tool (10) if no calibration has been performed.

19. Method according to one of claims 17 or 18, comprising the following steps:

- coding of the radio-electric signal (s(t)) generated by the radio-electric signal generator (40),
- pairing of a portable device (20) the power tool (10) based on said encoded signal, said radio-electric signal generator (40) injecting said radio-electric signal via said portable device (20).

Fig. 1

Fig. 3

Fig. 2

Fig. 4

Fig. 5

Fig. 6

## RÉFÉRENCES CITÉES DANS LA DESCRIPTION

**Documents brevets cités dans la description**

- FR 2838998
- EP 2020275 A
- EP 2885962 A
- EP 1452280 A
- US 20130127262 A
- WO 2013136311 A
- FR 2831476
- FR 2846729
- FR 3001404
- US 2010064532 A
- WO 07060698 A
- GB 2473061 A